(19) Europäisches Patentamt
European Patent Office
Office européen des brevets

(11) Veröffentlichungsnummer: **0 433 888 A2**

(12) **EUROPÄISCHE PATENTANMELDUNG**

(21) Anmeldenummer: **90124071.3**

(22) Anmeldetag: **13.12.90**

(51) Int. Cl.5: **C08G 65/32**, C08G 81/00, C07C 43/11, C07C 41/09

(30) Priorität: **22.12.89 DE 3942534**

(43) Veröffentlichungstag der Anmeldung: **26.06.91 Patentblatt 91/26**

(84) Benannte Vertragsstaaten: **BE CH DE DK FR GB IT LI NL SE**

(71) Anmelder: **BASF Aktiengesellschaft**
**Carl-Bosch-Strasse 38**
**W-6700 Ludwigshafen(DE)**

(72) Erfinder: **Baur, Richard, Dr.**
**Nelkenstrasse 1**
**W-6704 Mutterstadt(DE)**
Erfinder: **Houben, Jochen, Dr.**
**Benzstrasse 93**
**W-6520 Worms 26(DE)**
Erfinder: **Oftring, Alfred, Dr.**
**Im Roehrich 49**
**W-6702 Bad Duerkheim(DE)**

(54) **Verfahren zur Herstellung von Polyalkylenglykolbisethern.**

(57) Herstellung von Polyalkylenglykolbisethern I

$$R^1-O-(A^1-O)_m-(A^2-O)_n-R^2 \qquad I$$

in der

$R^1$ und $R^2$ für geradkettige oder verzweigte $C_1$-$C_{30}$-Alkyl- oder $C_2$-$C_{30}$-Alkylengruppen, für gegebenenfalls durch $C_1$-$C_4$-Alkylgruppen substituierte Arylreste mit insgesamt bis zu 12 C-Atomen oder für Arylalkylreste mit insgesamt bis zu 20 C-Atomen stehen,

$A^1$ und $A^2$ 1,2-Alkylengruppen mit 2 bis 4 C-Atomen bezeichnen und

m und n Werte von 1 bis 100 haben,

indem man einem alkoxylierten Alkohol oder ein alkoyliertes Phenol IIa

$$R^1-O-(A^1-O)_m-H \qquad IIa$$

mit einem alkoxylierten Alkohol oder Phenol IIb

$$H-O-(A^2-O)_n-R^2 \qquad IIb$$

in Gegenwart eines sauren Katalysators erhitzt.

EP 0 433 888 A2

# VERFAHREN ZUR HERSTELLUNG VON POLYALKYLENGLYKOLBISETHERN

Die vorliegende Erfindung betrifft ein verbessertes Verfahren zur Herstellung von Polyalkylenglykolbisethern der allgemeinen Formel I

$$R^1\text{-}O\text{-}(A^1\text{-}O)_m\text{-}(A^2\text{-}O)_n\text{-}R^2 \qquad \text{I}$$

in der die Variablen

- $R^1$ und $R^2$ für geradkettige oder verzweigte $C_1$-$C_{30}$-Alkyl- oder $C_2$-$C_{30}$-Alkylengruppen, für Arylreste, welche zusätzlich durch $C_1$-$C_4$-Alkylgruppen substituiert sein können, mit insgesamt bis zu 12 C-Atomen oder für Arylalkylreste mit insgesamt bis zu 20 C-Atomen stehen,
- $A^1$ und $A^2$ 1,2-Alkylengruppen mit 2 bis 4 C-Atomen bezeichnen und
- m und n Werte von 1 bis 100 haben.

Die DE-C 28 00 710 (1) betrifft ein Verfahren zur Herstellung von veretherten Polyoxyalkylenderivaten durch Umsetzung der entsprechenden alkoholische Hydroxylgruppen enthaltenden Polyoxyalkylenverbindungen mit halogenierten Kohlenwasserstoffen in Gegenwart von Alkalimetallhydroxid.

In der DE-A 37 26 121 (2) wird ein Verfahren zur Herstellung von veretherten Polyoxyalkylenderivaten durch Umsetzung der entsprechenden hydroxylgruppenhaltigen Polyoxyalkylenverbindungen mit einem Dialkylsulfat in Gegenwart von Alkalimetallhydroxid beschrieben.

Die DE-A 36 06 190 (3) betrifft ein Verfahren zur Herstellung von Diethylenglykoldialkylethern durch Umsetzung von Diethylenglykol mit Alkalimetallhydroxid und einem Alkylhalogenid in einem höheren Diethylenglykoldialkylether als Lösungsmittel.

In den in den Schriften (1) bis (3) beschriebenen Verfahren geht man jeweils von hydroxylgruppenhaltigen Polyoxyalkylenverbindungen bzw. Diethylenglykol und einem Alkylhalogenid bzw. Dialkylsulfat aus. In der Regel müssen die Alkylhalogenide und die Dialkylsulfate aber erst gesondert hergestellt werden, insbesondere wenn es sich um seltener verwendete Alkylreste handelt.

Der vorliegenden Erfindung lag daher die Aufgabe zugrunde, ein einfaches Verfahren zur Herstellung von Polyalkylenglykolbisethern I unter Vermeidung der Synthese einer derartigen Zwischenstufe bereitzustellen.

Demgemäß wurde ein Verfahren zur Herstellung von Polyalkylenglykolbisethern I gefunden, das dadurch gekennzeichnet ist, daß man einen alkoxylierten Alkohol oder ein alkoxyliertes Phenol der allgemeinen Formel IIa

$$R^1\text{-}O\text{-}(A^1\text{-}O)_m\text{-}H \qquad \text{IIa}$$

mit einem alkoxylierten Alkohol oder Phenol der allgemeinen Formel IIb

$$H\text{-}O\text{-}(A^2\text{-}O)_n\text{-}R^2 \qquad \text{IIb}$$

in Gegenwart eines sauren Katalysators erhitzt.

Die Variablen $R^1$ und $R^2$ stehen vor allem für geradkettige oder verzweigte $C_1$-$C_{30}$-Alkyl- oder $C_2$-$C_{30}$-Alkenylgruppen, vorzugsweise für $C_6$-$C_{20}$-Alkyl- oder -Alkenylgruppen. Als Beispiele für $R^1$ und $R^2$ sind Methyl, Ethyl, n-Propyl, iso-Propyl, n-Butyl, tert.-Butyl, n-Hexyl, n-Heptyl, n-Octyl, iso-Octyl, 2-Ethylhexyl, n-Nonyl, iso-Nonyl, n-Decyl, n-Undecyl, n-Dodecyl, n-Tridecyl, iso-Tridecyl, Myristyl, Cetyl, Stearyl, Eicosyl, Hexacosyl, Vinyl, 1-Propenyl, 2-Propenyl, Oleyl, Linolyl und Linolenyl zu nennen.

Weiterhin können $R^1$ und $R^2$ auch für Arylreste, welche zusätzlich durch bis zu 3 $C_1$-$C_4$-Alkylgruppen substituiert sein können, mit insgesamt bis zu 12 C-Atomen, vorzugsweise 10 C-Atomen, stehen. Beispiele hierfür sind Phenyl, Naphthyl, Biphenyl, Tolyl, Xylyl, Mesityl und Cumyl.

Weiterhin können $R^1$ und $R^2$ auch für Arylalkylreste mit insgesamt bis zu 20 C-Atomen, vorzugsweise 10 C-Atomen, stehen, beispielsweise für Benzyl, 2-Phenylethyl, 3-Phenylpropyl, 4-Phenylbutyl, Tolylmethyl, Xylylmethyl, 2-Tolylethyl und 2-Xylylethyl.

Die 1,2-Alkylengruppen $A^1$ und $A^2$ bezeichnen insbesondere Ethylen-, daneben aber auch Propylen-,

1,2-Butylen- und 2,3-Butylengruppen.

Die Alkoxyierungsgrade m und n haben jeweils Werte von 1 bis 100, vorzugsweise von 1 bis 30. Insbesondere liegt die Summe von m + n zwischen 4 und 20. Die Werte für m und n stellen üblicherweise Durchschnittswerte dar.

Besonders vorteilhaft läßt sich das erfindungsgemäße Verfahren auf die Herstellung solcher Polyalkylenglykolbisether I anwenden, in denen jeweils die Variablen $R^1$ und $R^2$, $A^1$ und $A^2$ sowie m und n gleich sind. Hierbei erhält man nämlich in der Regel ein einheitliches Reaktionsprodukt, wogegen beim Einsatz verschiedener alkoxylierter Alkohole bzw. Phenole IIa und IIb ein manchmal nicht gewünschtes Gemisch unterschiedlicher Polyalkylenglykolbisether entstehen kann.

Zur Durchführung des erfindungsgemäßen Verfahrens erhitzt man die Verbindungen IIa und IIb üblicherweise auf Temperaturen zwischen 100 und 250 °C, insbesondere 130 bis 220 °C. Man arbeitet üblicherweise bei Normaldruck; wenn die Komponenten IIa oder IIb bei den angegebenen Temperaturen flüchtig sind, empfiehlt sich eine Arbeitsweise im geschlossenen System unter Eigendruck. Die Umsetzung benötigt in der Regel 3 bis 15 Stunden. Man arbeitet normalerweise unverdünnt, die Umsetzung kann aber auch in Gegenwart eines inerten organischen Lösungsmittel, beispielsweise eines Kohlenwasserstoffs, vorgenommen werden.

Die Verbindungen IIa und IIb können in äquimolarem oder jedem beliebigen Verhältnis miteinander erhitzt werden. Der überschüssige Anteil einer Komponente reagiert dann mit sich selber.

Das bei der Kondensation von IIa und IIb entstandene Wasser wird normalerweise während der Umsetzung fortlaufend abdestilliert, beispielsweise durch azeotrope Destillation mit einem organischen Lösungsmittel wie Toluol, Xylol oder Octan, durch Durchleiten eines inerten Gases wie Stickstoff ausgeblasen oder durch Anlegen eines Vakuums entfernt. Das Wasser kann aber auch im Reaktionsansatz verbleiben.

Als saure Katalysatoren können in den für Katalysatoren üblichen Mengen, also etwa 0,001 bis 0,2 mol pro Mol IIa oder IIb, eine Protonensäure wie Schwefelsäure, Borsäure oder Toluolsulfonsäure, eine Lewissäure wie Bortrifluorid, ein saurer Ionenaustauscher oder ein sauer reagierendes Metalloxid oder Metallsalz sowie Mischungen der genannten Stoffe eingesetzt werden. Es empfiehlt sich, die sauren Katalysatoren nach Beendigung der Umsetzung mit einer schwachen Base, beispielsweise Natriumacetat, Natriumhydrogencarbonat oder Kaliumcarbonat, zu neutralisieren und anschließend die Feststoffe abzufiltrieren.

Im Anschluß an die Umsetzung kann man mögliche gefärbte Verunreinigungen in den erhaltenen Produkten durch Behandeln mit Wasserstoffperoxid oder Aktivkohle zerstören. Führt man die Kondensation bei einer etwas zu niedrigen Temperatur oder zu kurzen Reaktionsdauer durch, kann das Produkt noch geringe Mengen an Alkoholen bzw. Phenolen IIa und IIb enthalten, die aber für die weiteren Anwendungszwecke nicht stören.

Die zur Umsetzung benötigten alkoxylierten Alkohole oder Phenole IIa bzw. IIb werden in an sich bekannter Weise aus den entsprechenden Alkoholen oder Phenolen durch Umsetzung mit der m- oder n-fachen molaren Menge an Ethylenoxid, Propylenoxid oder Butylenoxid hergestellt. Höhere Alkanole und Alkenole sind beispielsweise natürlich vorkommende Fettalkohole oder synthetisch hergestellte Alkohole; letztere werden üblicherweise durch die Oxosynthese hergestellt und sind dann in der Regel Gemische verschiedener Isomerer und benachbarter Homologer.

Die Polyalkylenglykolbisether I finden Verwendung als oberflächenaktive Substanzen, hauptsächlich als nichtionogene Tenside oder Emulgatoren in Wasch- und Reinigungsmitteln, insbesondere für maschinell ablaufende schaumarme Reinigungsverfahren in der Papier-, Textil- oder Nahrungsmittelindustrie, beispielsweise die Textilvorbehandlung oder die industrielle Flaschenwäsche. Weiterhin eignen sie sich für den Einsatz in Geschirrspülmaschinen.

Das erfindungsgemäße Verfahren stellt ein einfaches, d.h. einstufiges, und effizientes Herstellungsverfahren für die Verbindung I dar. Insbesondere kann hierbei auf den Einsatz von ökologisch bedenklichen oder toxischen Alkylhalogeniden bzw. Alkylsulfaten verzichtet werden.

Beispiel

400 g eines ethoxylierten $C_{10}$-Oxoalkohols mit einem durchschnittlichen Ethoxylierungsgrad von 7 (entsprechend 0,86 mol) und einer OH-Zahl von 132 mg KOH/g wurden zusammen mit 4 g 96 gew.-%iger Schwefelsäure (entsprechend 0,04 mol) unter Durchleiten von Stickstoff 9 Stunden bei Normaldruck auf 170 °C erhitzt. Anschließend wurden 5 g Kaliumcarbonat zugegeben. Nach Filtration des noch warmen Reaktionsgemisches durch einen Aktivkohlefilter resultierte ein gelbes Öl, das eine OH-Zahl von 26 mg KOH/g aufwies und das im wesentlichen aus einem ethoxylierten Bis-$C_{10}$-Oxoalkohol mit einem durch-

schnittlichen Ethoxylierungsgrad von 14 in der Polyoxyethylen-Brücke bestand.

**Ansprüche**

1. Verfahren zur Herstellung von Polyalkylenglykolbisethern der allgemeinen Formel I

$$R^1-O-(A^1-O)_m-(A^2-O)_n-R^2 \qquad I$$

in der die Variablen

$R^1$ und $R^2$ für geradkettige oder verzweigte $C_1$-$C_{30}$-Alkyl- oder $C_2$-$C_{30}$-Alkylengruppen, für Arylreste, welche zusätzlich durch $C_1$-$C_4$-Alkylgruppen substituiert sein können, mit insgesamt bis zu 12 C-Atomen oder für Arylalkylreste mit insgesamt bis zu 20 C-Atomen stehen,

$A^1$ und $A^2$ 1,2-Alkylengruppen mit 2 bis 4 C-Atomen bezeichnen und

m und n Werte von 1 bis 100 haben,

dadurch gekennzeichnet, daß man einen alkoxylierten Alkohol oder ein alkoxyliertes Phenol der allgemeinen Formel IIa

$$R^1-O-(A^1-O)_m-H \qquad IIa$$

mit einem alkoxylierten Alkohol oder Phenol der allgemeinen Formel IIb

$$H-O-(A^2-O)_n-R^2 \qquad IIb$$

in Gegenwart eines sauren Katalysators erhitzt.

2. Verfahren zur Herstellung von Polyalkylenglykolbisethern I nach Anspruch 1, in denen die Variablen $R^1$ und $R^2$ für geradkettige oder verzweigte $C_1$-$C_{30}$-Alkyl- oder $C_2$-$C_{30}$-Alkenylgruppen stehen.

3. Verfahren zur Herstellung von Polyalkylenglykolbisethern I nach Anspruch 1 oder 2, in denen die Variablen $A^1$ und $A^2$ 1,2-Ethylengruppen bezeichnen.

4. Verfahren zur Herstellung von Polyalkylenglykolbisethern I nach den Ansprüchen 1 bis 3, in denen m und n Werte von 1 bis 30 haben.

5. Verfahren zur Herstellung von Polyalkylenglykolbisethern I nach den Ansprüchen 1 bis 4, in denen jeweils die Variablen $R^1$ und $R^2$, $A^1$ und $A^2$ sowie m und n gleich sind.